Europäisches Patentamt

**European Patent Office**

**Office européen des brevets**

(19)

(11) Publication number: **0 117 610**
A2

# EUROPEAN PATENT APPLICATION

(12)

(21) Application number: **84300265.0**

(22) Date of filing: **17.01.84**

(51) Int. Cl.³: **F 16 K 5/00**

(30) Priority: **31.01.83 US 462469**
**11.03.83 US 474468**

(43) Date of publication of application: **05.09.84**
Bulletin 84/36

(84) Designated Contracting States: **BE DE FR GB IT NL**

(71) Applicant: **KEROTEST MANUFACTURING**
**CORPORATION, 2525 Liberty Avenue, Pittsburgh**
**Pennsylvania 15222 (US)**

(72) Inventor: **Conley, Richard W., 342 Ashton Avenue,**
**Pittsburgh Pennsylvania 15207 (US)**
Inventor: **Bolam, Charles E., 467 Hunting Creek Road,**
**Canonsbury Pennsylvania 15317 (US)**
Inventor: **Tremblay, Richard P., 715 Vallevista Avenue,**
**Pittsburgh Pennsylvania 15234 (US)**
Inventor: **Logan, James E., 137 North Sprague Avenue,**
**Pittsburgh Pennsylvania 15202 (US)**
Inventor: **Kreuger, David A., 265 Florence Drive,**
**Harleysville Pennsylvania 19438 (US)**

(74) Representative: **Topps, Ronald et al, D. YOUNG &**
**CO 10 Staple Inn, London WC1V 7RD (GB)**

(54) **Plastics flow control valve.**

(57) A valve having a moulded plastic body (14) provided with an internal chamber having upper and lower portions (18, 20) is connected by compression fittings (34, 36) to conduits (30, 32) of a piping system (12), a moulded plastics valve member (40) is rotatably positioned in a valve seat in the chamber lower portion (20), the valve member (40) including an integral plug portion (47) and an actuator portion (48), the plug portion (46) having a flow passage (50) which is rotatable into and out of communication with inlet and outlet openings (22, 24) in the valve seat between open and closed valve positions. Seals (54) retained on the plug portion (46) engage the valve seat in the closed position. A flange portion (60) and a stem portion (62) of the actuator (48) extend upwardly above the valve body (14), the flange portion (60) bearing on an upper shoulder (70) of the valve body (14) so that impact forces applied to the actuator portion are transmitted from the flange portion (60) to the valve body (14) and to the piping system (12) connected to the valve body (14). This arrangement prevents localized concentration of impact forces on the stem and plug portions of the valve actuator.

1

# PLASTICS FLOW CONTROL VALVE

This invention relates to a flow control valve and more particularly to a rotary plug-type service valve moulded of a high strength plastics material and having a unitary plug and actuator member rotatable in a valve seat of the valve body having inlet and outlet ports connected by compression couplings to a pair of conduits.

It is well known to fabricate a service valve, such as a ball valve or a plug valve, of moulded polyethylene to include a one-piece body having a valve seat with a first passage opening to the seat and a second passage opening to the seat. A rotary member is positioned in the valve seat and a passageway extending through the rotary member is movable with the rotary member between a closed position where the flow between the first and second passages of the valve body is blocked and an open position where the passage through the rotary member is aligned with the passages in the valve body to permit flow between the first and second passages through the rotary member. The rotary member is provided with seat seals which seal against the wall surrounding the valve body passages to shut off the flow through the passages when the rotary member is turned to the closed position. The valve body includes screw-threaded fitting portions which are connected by compression couplings to conduits or pipes of a piping system.

It is also known to provide an integral stem and plug arrangment where the stem extends upwardly from the plug and is connected to an adapter for turning the stem. The unitary stem and plug are moulded of polythylene. Because the stem projects upwardly and through the valve body to support the valve actuator, the stem is exposed to external impact blows which are transmitted downwardly through the pressure boundary in the valve to the plug. Accordingly, the stem must have a sufficient cross-sectional area to withstand the impact blows, as well as to withstand the torsional forces transmitted by the valve actuator during operation of the valve.

In view of the fact that polyethylene is a relatively soft and medium-yield material, a polyethylene valve stem must have a thickness substantially greater than the wall thickness of the polyethylene valve body.

It is the conventional practice to fabricate the known polyethylene plug and ball valves by an injection moulding process. An integral stem and plug has specific structural requirements that substantially complicate the moulding process. Additionally, because polyethylene is a relatively soft plastics material, the valve parts must include relatively thick sections to safely transmit operating forces. These thick valve sections cause the unit cost to increase because increased injection moulding machine time is required to allow the thicker sections to cool once the mould is filled with injected plastics material. The tooling cost associated with this specialized moulding process is high. Consequently, the overall manufacturing time and cost of fabricating a polyethylene service valve mould are high.

An additional problem encountered in the operation of polyethylene service valves is the tendency of the valve body parts to creep or migrate away from one another when subjected to high pressure, particularly when the pressure is applied to the seat seal on one side of the plug without a corresponding supporting pressure on the other side of the plug. One solution to controlling this migration or creep is reinforcement of the portion of the valve body that surrounds the plug seat seals. By reinforcing the valve body, the normal tendency of the elastomeric material to creep or separate is overcome by rigidifying the valve body.

In one method, the valve body is rigidified by providing an enlarged, integral, external reinforcement ring around the valve body opposite the valve seat. It is also known to provide internal reinforcement rings embedded in a valve body around the valve seat. This reinforced structure is designed to prevent separation or migration of the elastomeric material of the valve body away from the plug member around the valve seat.

The provision of moulded external, as well as, internal reinforcement rings on a valve body requires specialized moulding of the valve body to accommodate the reinforcing structure at localized points externally or internally. The moulded valve body, therefore, does not have a uniform thickness throughout. The mould for the valve body is considered to be complex because of the need to provide for variations in the wall thickness of the valve body. Such a mould requires complex machine operations to fabricate.

Another recognized problem is connecting the known plastics valves to a service line without subjecting the sealing gasket of the compression couplings to an excessive force applied by the collar due to over-torquing or uncontrolled rotation of the nut on the valve pipe stub end. If rotation of the nut is not controlled, the gasket may be compressed beyond its ability to maintain an effective seal around the pipe due to the excessive compression of the gasket by the collar as it is advanced upon rotation of the nut.

Therefore, there is need in a plastics service valve for an integral stem and plug capable of withstanding impact loads directed upon the valve stem, as well as, torsional forces transmitted during operation of the valve and for a compression type coupling that provides complete and controlled compression of a sealing gasket around the pipe and against the body of the fitting.

In accordance with the present invention, there is provided a flow control valve comprising, a valve body moulded of plastics material and having a chamber with an upper portion and a lower portion, said lower portion having an inlet opening and an outlet opening, a valve seat in said chamber lower portion between said inlet and outlet openings, a valve member positioned in said valve seat between said inlet and outlet openings said valve member being moulded of plastics material to form a unitary body including a plug portion and an actuator portion, said plug portion having a flow passage therethrough, said plug portion being rotatable in said valve seat between an open position where said flow passage is aligned with said inlet and outlet openings and a closed position where said flow passage is out of alignment with said inlet and outlet openings to control the flow of fluid through said chamber lower portion, said actuator portion extending upwardly through said chamber upper portion and including a flange and a stem, said flange and said stem being connected to said plug portion, said flange being spaced circumferentially around said stem and extending upwardly between said valve body and said stem to a position overlying said valve body and thereby closing said chamber upper portion, said stem projecting upwardly from within said flange and above said valve body, said valve body including an upper shoulder extending circumferentially around said chamber upper portion, and said flange being positioned on said upper shoulder so that impact forces applied to said actuator portion are transmitted away from said stem and plug and from said flange to said valve body and distributed throughout the valve body.

4

With the valve of the present invention, the force of an external impact blow directed either upon the valve stem or the valve actuator is transmitted uniformly throughout the valve body from the flange of the valve member to the upper shoulder of the valve body and through the valve body to the fittings and therefrom through the pipe couplings to the pipeline. Thus, impact forces are transmitted away from the centreline of the valve stem. With this arrangement, the effect of an impact blow is not localized at the valve stem or the valve actuator, but is diverted away from this portion of the valve and directed to the pipeline system. In this manner, fatigue and stress of the valve member attributed to external impact blows and valve leakage or valve failure, which is known to result therefrom, is reduced.

Further in accordance with the present invention, there is provided on the valve a pipe coupling that includes a fitting having a body portion with a bore for receiving a pipe. The body portion has a recess surrounding the bore to form an internal shoulder within the fitting. An elastic deformable member is positioned in the recess in abutting relation with the shoulder and is adapted to encircle and seal against the pipe and the fitting body portion. A nut is threadedly connected to the fitting body portion for advancement into the bore. The nut has an internal bore with an internal wedge surface. A pipe-gripping collar

5

has an external wedge surface complementary to and cooperating with the nut internal wedge surface so that the collar is positioned within the nut internal bore and surrounding the pipe. The nut includes an end portion surrounding the collar. The nut end portion has a bearing surface for applying a compressive force which is transmitted to the elastic deformable member to compress the elastic deformable member against the fitting shoulder. The nut is threadedly advanced upon rotation into the fitting bore to apply an axial force upon the elastic deformable member to compress the elastic deformable member to form a seal around the pipe and against the fitting body portion within the fitting and axially advance the collar into frictional engagement with the pipe to retain the pipe within the fitting.

An embodiment of the present invention will now be described, by way of an example, with reference to the accompanying drawings, in which:

Figure 1 is a sectional view in side elevation of a plastics service valve, illustrating the connection of a valve body to a pair of pipes in a pipeline system,

Figure 2 is a top plan view of the plastics service valve shown in Figure 1, illustrating an actuator of the valve in a closed position,

Figure 3 is a sectional view taken along line III-III of Figure 1, illustrating the stops on the actuator and valve body for 90° operation of the valve between the open and closed positions,

Figure 4 is a sectional view taken along line IV-IV of Figure 1, illustrating one of the two seat seals that are secured to a plug portion of a valve member, and

Figure 5 is an enlarged, exploded, fragmentary, isometric view partially in section of the valve member illustrating an integral plug portion, actuator portion and stem portion and the seat seals that are received within the counterbores of the plug portion.

6

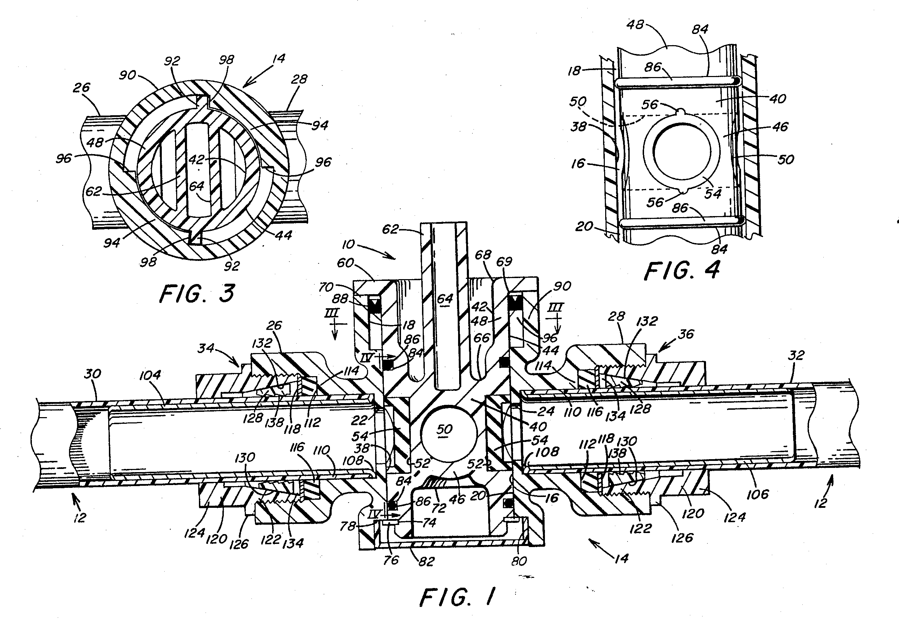

Referring to the drawings, and particularly to Figure 1, there is illustrated a service valve generally designated by the numeral 10 of the rotary plug type which is adapted for use as a distribution valve or service stop for controlling the flow of a fluid, either liquid or gas, through a piping system generally designated by the numeral 12. The service valve 10 includes a valve body generally designated by the numeral 14 having a chamber 16 with an upper portion 18 and a lower portion 20. The lower portion 20 has inlet/outlet openings 22 and 24. The valve body 14 also includes conduit or fitting portions 26 and 28 extending from the openings 22 and 24 respectively. The fitting portions 26 and 28 are adapted for connection to a pair of service conduits or pipes 30 and 32 respectively of the piping system 12. The service conduits 30 and 32 are connected to the fitting portions 26 and 28 by compression couplings generally designated by the numeral 34 and 36, which will be described later in greater detail.

The chamber lower portion 20 of the valve body 14 includes a valve seat 38 extending between and around the inlet and outlet openings 22 and 24. A valve member 40 is rotatably positioned in the valve seat 38 between the openings 22 and 24. The valve member 40 is moulded of plastics material to form a unitary body of a substantially uniform thickness throughout having an internal surface 42 and an external surface 44. With this configuration, the valve member 40 is efficiently moulded, preferably by an injection-moulding process, without requiring enlarged body parts having a thickness greater than the other body parts and thereby increasing the complexity of the moulding process and costs of machining the mould for the valve member 40.

The valve member 40 includes an integral plug portion 46 and an actuator portion 48. As stated above, the valve member 40 is moulded so that both the plug portion 46 and the actuator portion 48 have substantially the same body thickness to provide uniformity of construction throughout the valve member 40. The plug portion 46 has a flow passage 50 therethrough, and is rotatable in the valve seat 38 between an open position and a closed position. In the open position, the flow passage 50 is aligned with the openings 22 and 24 to permit fluid flow therethrough. In the closed position, as shown in Figure 1, the flow passage 50 is 90° out of alignment with the inlet and outlet openings 22 and 24 to interrupt fluid flow therethrough.

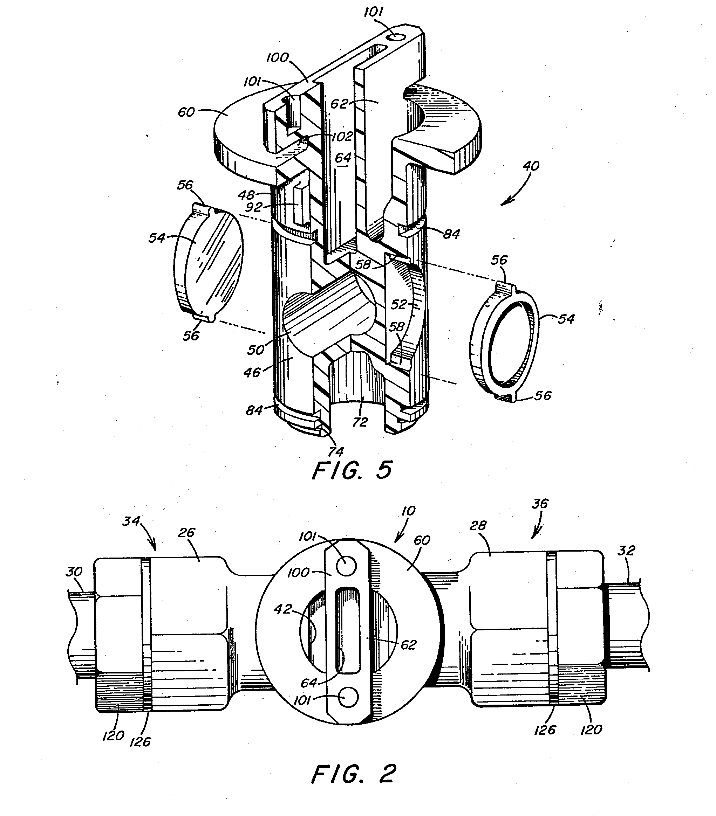

The plug portion 46 is illustrated in greater detail in Figure 5 and includes a pair of counterbores 52 in the external surface of the plug portion 46. The counterbores 52 are spaced 90° relative to the flow passage 50. Elastomeric inserts 54 are secured in the counterbores 52, as shown in Figures 1 and 4, to serve as seat seals for engaging the valve seat 38 around the inlet and outlet openings 22 and 24 when the valve member 40 is in the closed position, as illustrated in Figure 1. Preferably, the inserts 54 are molded of an elastomeric material, such as Buna N or polyurethane material.

To properly orient and secure the seat seal inserts 54 on the surface of the plug portion 46, the inserts 54 are provided with a pair of oppositely extending keys or tabs 56 shown in Figure 5 that are received within corresponding keyways 58 of the counterbores 52. The keys 56 have a length corresponding substantially to the keyways 58 so that when the inserts 54 are positioned in the counterbores 52, they are securely and properly oriented on the surface of the plug portion 46 at the location of the counterbores 52. The inserts 54 are slightly oversized in relation to the diameters of the plug counterbores 52. Thus, in order to position the inserts 54 in the counterbores 52, the inserts 54 must be radially compressed. When the inserts 54 are positioned in the counterbores 52, they remain radially compressed. With this arrangement, the outer surfaces of the inserts 54 protrude outwardly from the plug portion 46 to assure that the inserts 54 seal against the wall of the chamber lower portion 20 around the openings 22 and 24.

Preferably, the inserts 54 are formed from an elastomeric material which is molded in the configuration illustrated in Figures 1, 4, and 5. The inserts 54 have an outer diameter greater than the diameter of the counterbores 52 to the extent that in order to position the inserts 54 in the counterbores 52, the outer circumferential wall of the inserts 54 must be compressed. Thus, when the inserts 54 are firmly in place in the counterbores 52, the inserts 54 are under compression and securely retained in place. To assure a secure engagement of the inserts 54 in the counterbores 52 of the plug portion 46, the inserts 54 must be radially compressed inwardly to fit in the counterbores 52. Once the inserts 54 are in place in the counterbores 52, the inserts 54 are under compression and, thereby, retained in secure abutting relation with the walls of the plug portion 46 around the counterbores 52. With this arrangement, the inserts 54 are prevented from being displaced from the counterbores 52 when they are moved into and out of sealing relation with the valve body 14 around the openings 22 and 24 which form the valve seat 38.

As illustrated in Figures 1 and 5, the valve actuator portion 48 extends upwardly through the valve chamber upper portion 18 to provide an arrangement for closing the valve chamber upper portion 18. The actuator portion 48 is an integral part of the plug portion 46 and includes a flange 60 and a stem 62. The flange 60 is connected to and, thereby, forms an extension of the peripheral surface of the plug portion 46. The stem 62 is also connected to the plug portion 46 and extends centrally and upwardly from the plug portion 46.

The flange 60 is spaced circumferentially around the stem 62. The flange 60 extends upwardly between the valve body 14 and the stem 62 to a position overlying the valve body 14 to, thereby, close the chamber upper portion 18. The stem 62 projects upwardly within the flange 60 and above the valve body 14 to facilitate manipulation of the stem 62 to open and close the service valve 10.

9

As seen in Figure 1, the valve member 40 is moulded to provide the stem 62 with an internal core 64 surrounded by a wall having a thickness corresponding to the wall thickness of the flange 60. Most preferably, the flange 60 and stem 62 are moulded to provide external radial surfaces at a point 66 where the flange 60 and the stem 62 join the plug portion 46 and at points 68 and 69 where the flange 60 overlies the valve body 14. With this arrangement, the flange 60 and stem 62 are integrally formed with a substantially uniform wall thickness throughout. This feature minimizes internal stresses attendant with the moulding process that are caused by unequal "shrink" of unequal thicknesses of the plastics material as it cools down. The substantially uniform wall, therefore, increases the strength of the flange 60 and stem 62. In addition, the radial surfaces formed at the points 66, 68, and 69 provide the valve member 40 with increased structural strength to resist impact forces applied to the flange 60 and the stem 62. The radial forces are operable to distribute impact forces evenly to the flange 60; while, a normally sharp corner at points 66, 68 and 69 would concentrate the impact forces at the sharp corner and produce premature failure.

The valve body 14, as illustrated in Figure 1, includes an upper shoulder 70 that extends around the chamber upper end portion 18. The upper shoulder 70 forms a circumferential bearing surface for receiving the bottom surface of the flange 60 of the actuator portion 48. This arrangement provides a relatively large flange/body contact area that is operable to absorb substantial impact loads applied to the actuator portion 48 without damaging it or the valve body 14.

By providing a substantial contact area between the flange 60 and the upper shoulder 70 of the valve body 14, when an impact force is applied to the actuator portion 48 it moves downwardly until the flange 60 abuts the shoulder 70, thereby restraining further downward movement of the plug portion 46. The impact forces are transmitted away from the stem 62 and the plug portion 46 through the valve body 14 and the couplings 34 and 36 to the piping system 12. Alternately, the impact forces may be transmitted from the valve body 14 to the valve support (not shown) installed with the service line. This arrangement provides the service valve 10 with an impact resistant structure which is capable of transmitting impact loads directed upon the top of the actuator portion 48 to an area of the valve 10 removed from the vertical center line of the valve member 40 and, in particular, away from the valve member 40 and through the valve body 14 to the conduits 30 and 32.

The ability of the service valve 10 to resist impact forces applied to the upper portion of the valve 10, and, particularly to the flange 60 and the stem 62 is enhanced by the radial surfaces that extend from the horizontal flange portion 60 downwardly to the vertical wall of the actuator portion 48. Thus, the radial surfaces of the flange 60, together with the substantial contact area provided between the flange 60 and the upper shoulder 70 of the valve body 14, permit relatively high impact loads to be applied to the valve 10 without damaging the valve body 14 or the valve member 40.

The service valve 10, including the valve body 14 and the valve member 40 and the coupling therefor, which will be described later, is fabricated of a plastic material by injection molding. Most preferably, the valve body 14, the valve member 40 and the coupling are made from a thermoplastic material known as ZYTEL ST 801 marketed by Dupont. This material is preferred because it possesses high impact resistant properties and when used to fabricate the valve of the present invention provides the valve body 14 and the valve member 40 with substantial, structural rigidity that resists creep or migration of these body parts away from each other, particularly, in the area above and below the seal inserts 54 where the valve body 14 abuts the plug portion 46.

Most preferably, the valve body 14 and the valve member 40 are molded to provide a uniform wall thickness throughout these valve parts. The wall thickness is equal for both the valve body 14 and the valve member 40. This eliminates the need for the valve body 14 to include, for example, a built-up area or a reinforcing ring that extends around the valve body 14 to resist migration or creep of the elastomeric valve body 14 away from the valve member 40.

Referring to Figure 5, there is illustrated, in greater detail, the features of the valve member 40 and seat seal inserts 54. The valve member 40 has a lower end through which extends a counterbore 72 below the flow passage 50. Surrounding the counterbore on the outer surface of the valve member 40 is an annular groove 74 adapted to receive a snap ring 76 shown in Figure 1. The snap ring 76 is releasably engageable in the groove 74 with an internal shoulder 78 of the valve body 14 to permit disassembly of the valve 10 without damaging any of the components of the valve 10. The valve body 14, as illustrated in Figure 1, includes a lower annular recess 80 that surrounds the lower end of the valve member 40. The connection of the valve member 40 to the valve body 14 is sealed by a cover 82, also fabricated of a plastic material, to protect this area of the service valve 10 from tampering, as well as, to protect the internal components of the valve 10 from water and debris entering the valve chamber lower end portion 20.

The cover 82 has a cup-shaped configuration and is releasably insertable into the valve body recess 80 and engageable with the body portion wall surrounding the recess 80. The cover 82 extends to a depth in the recess 80 to abut the shoulder 78. The cover 82 is releasable from engagement with the valve body portion wall surrounding the recess to permit efficient disassembly and removal of the valve member 40 from the valve body 14 for maintenance of the valve or the like.

As illustrated in Figures 1, 4, and 5, the plug portion 46 of the valve member 40 includes a pair of circumferential grooves or recesses 84 positioned above and below the flow passage 50. A pair of annular seals 86 having a circular cross section are fabricated of an elastomeric material. The seals 86 are received within the annular grooves 84 and sealingly engage the inner circumferential wall of the valve body 14. The seals 86 provide an effective seal above and below the flow passage 50 to prevent leakage around the plug portion 46 and both upwardly and downwardly through the valve body 14.

As illustrated in Figure 1, further sealing between the valve member 40 and the valve body 14 is provided by a weather seal ring 88. The seal ring 88 is fabricated of an elastomeric material positioned in surrounding relation with the actuator portion 48 underlying the flange 60 within the valve chamber upper portion 18. Preferably, the weather seal ring 88 is positioned within an enlarged diameter portion 90 of the valve body 14 below the actuator flange 60 and sealingly engages the internal circumferential wall of the valve body enlarged diameter portion 90.

Most preferably, the weather seal ring 88 is a one-way pressure seal ring having a U or V-shaped configuration directed upwardly toward the flange 60, so as to close off the chamber upper end portion 18 below the flange 60. The ring 88 is operable as a one-way pressure seal to prevent water and debris from entering the valve body 14 around the actuator portion 48 and permit the escape of excessive fluid pressure within the valve 10 upwardly and out of the valve 10 between the actuator portion 48 and the valve body 14.

Now referring to Figures 1, 2, and 3, there is illustrated, in detail, the features of the actuator portion 48 for the valve member 40 to operate between the open and closed positions. Referring particularly to Figure 3, there is illustrated the valve actuator portion 48 positioned for rotatable movement within the enlarged diameter portion 90 of the valve body 14. The actuator portion 48, as discussed above, is molded to provide a substantially uniform wall thickness throughout the actuator portion 48 and the stem 62 and also to provide the surfaces 42 and 44 with radial inside and outside corners. In this manner, the wall thickness of the actuator portion 48 substantially corresponds to the wall thickness of the stem 62 and, thereby, strengthens these valve member parts.

The actuator portion 48 includes an actuator stop mechanism, shown in Figure 3, for limiting rotational movement of the valve member 40 between the open and closed positions of the valve. Preferably, the actuator stop mechanism includes a pair of tabs 92, one of which is illustrated in Figure 5, that extend diametrically outwardly from the circumferential wall of the actuator portion 48 below the flange 60 and above the plug seal groove 84 and below the weather seal 88 within the enlarged cylindrical portion 90 of the valve body 14. Positioned in the portion 90 on the valve body 14 are a pair of stops or lands 94, shown in Figure 3. The stops 94 project inwardly and extend a preselected circumferential distance around the actuator portion 48. The actuator stops 94 each include shoulders 96 and 98 that are engageable with the tabs 92 of the actuator portion 48. The adjacent pairs of shoulders 96 and 98 are spaced a preselected distance apart to provide for 90° operation of the valve member 40 between the open and closed positions.

With the valve member 40 in the closed position, as illustrated in Figures 1 and 3, the tabs 92 abut the shoulders 98. To open the valve 10, the stem 62 is rotated in a counterclockwise direction until the tabs 92 engage the shoulders 96. In the event the stem 62 is over-torqued, the tabs 92 will break off from the actuator portion 48 to permit 360° operation of the valve member 40. With this arrangement, even though the stem 62 is overtorqued, the service valve 10 remains in operation without a failure of the pressure boundary between the valve member 40 and the valve body 14.

As a means to indicate the relative position of the valve member 40, i.e. in either the open position or the closed position, the valve stem 62 includes a wing top 100, illustrated in Figures 2 and 5. The above-described core 64 of the stem 62 extends upwardly through the wing top 100. In addition, in order to maintain a substantially uniform wall thickness throughout the valve elements, a pair of bores 101 extend downwardly a preselected distance in the wing top 100. The bores 101 are centered in the area between the core 64 and the opposite ends of the wing top 100. The closed ends of the bores 101 are spaced above recesses 102 to achieve the desired uniform wall thickness throughout the valve stem 62.

The wing top 100 has an elongated configuration extending in overlying relation with the flange 60. The wing top 100 is undercut, as illustrated in Figure 5, above the flange portion 60 to form a recess 102 in the stem 62. The provision of the recess 102 weakens the wing top 100 so that in the event the stem 62 is over-torqued, the wing top 100 will snap off before more extensive damage results to the valve member 40 so that valve member 40 remains operable. This arrangement is comparable to a mechanical fuse and prevents the valve 10 from being removed from service due to the application of excessive torque to the stem 62.

The provision of the wing top 100 also serves as a position indicator for the valve member 40. For example, when the valve member 40 is in the closed position, the wing top 100, as illustrated in Figure 2, is positioned perpendicular to the direction of flow through the conduits 30 and 32. In the open position of the valve member 40, the wing top 100 is aligned or parallel to the direction of flow through the conduits 30 and 32. This arrangement for indicating the position of the valve member 40 is effective as long as the tabs 92 remain connected to the actuator portion 48.

Now referring to Figure 1 and the details of the connection of the conduits 30 and 32 to the fitting portions 26 and 28 of the valve body 14, there is illustrated a pair of metallic stiffeners 104 and 106, which are positioned in the ends of the conduits 30 and 32, respectively, in underlying relation with the couplings 34 and 36. The stiffeners 104 and 106 are tubular members each having an outwardly flared end portion 108 that serves to prevent the stiffeners 104 and 106 from being inserted too far into the conduits 30 and 32. The metallic stiffeners 104 and 106 reinforce the plastic conduits 30 and 32 when compressed by the engagement of the couplings 34 and 36 on the valve body fitting portions 26 and 28.

15

Each of the fitting portions 26 and 28 includes a bore 110 for receiving the conduits 30 and 32. A recess 112 formed in the body of each fitting portion 26 and 28 surrounds the bore 110 to form an internal shoulder 114. An elastic deformable member, such as a Buna-N gasket 116 is positioned in the recess 112 in abutting relation with the internal shoulder 114. A washer 118, which may be fabricated from either plastics or metal, overlies the gasket 116 in the recess 112. A plastics nut 120, also fabricated of the same material used to mould the valve body 14 and the valve member 40, is threadedly connected to each fitting portion 26 and 28. Preferably, the fittings 26 and 28 are internally screw-threaded, and the nuts 120 are externally screw-threaded. The nuts 120 are threadedly advanced into the respective internally threaded ends of the bores of the fittings 26 and 28.

As seen in Figure 1, each nut 120 has a first externally threaded end portion 122 and, preferably, a hexagonal second end portion 124 separated from the threaded end portion 122 by a circumferentially extending shoulder 126. With this arrangement, the nut 120 is threadedly advanced into the fitting threaded bore until the shoulder 126 abuts the end of the respective fitting to limit the axial advancement of the nut 120 into the fitting. When the nut 120 is in this position, the nut end portion 122 directly applies a compressive force through the washer 118 upon the gasket 116 to compress the gasket 116 into sealing relation around the respective conduit and with the body of the fitting around the shoulder 114.

By limiting the advancement of the nut 120 into the fitting bore 110 by abutment of the shoulder 126 with the end of the fitting, the gasket 116 is compressed by the end of the nut and the degree of compression of the gasket 116 is controlled. In this manner, excessive compression and damage of the gasket 116 is prevented. Accordingly, the dimensional length of the nut threaded portion 122 from the shoulder 126 to the end of the nut 120 is selected to provide advancement of the nut 120 to a preselected stop point in the respective fittings 26 and 28. When the shoulder 126 abuts the end of the fitting, the end of the nut 120 is positioned at the stop point. At the stop point, the nut applies a preselected compressive force upon the gasket 116 to form a positive seal around the respective conduit between the conduit and the fitting body portion.

The nut 120 is operable to directly apply a compressive force through the washer 118 upon the gasket 116. Thus, the gasket 116 is urged into sealing relation with the outer surface of the respective conduit and the inner surface of the respective fitting around the recess 112. Control of the degree of advancement of the nut into the fitting assures positive sealing engagement of the gasket 116 with the respective conduits and fittings to form an effective fluid tight seal therearound.

A further feature of the couplings 34 and 36 is the positioning of pipe-gripping collars 128 between the nuts 120 and the respective conduits 30 and 32. Each pipe-gripping collar 128 has an external wedge surface 130 complementary and cooperating with an internal wedge surface 132 of the nut 120. The collar 128 is positioned in a bore 134 of the nut 120 surrounding the respective conduit. When the nut 120 is advanced to the stop point in the respective fitting where the shoulder 126 abuts the end of the fitting, the enlarged end of the collar 128 is spaced from the washer 118, as shown in Figure 1. Thus, it is not necessary for the collar 128 to be forced into abutting relation with the washer 118 in order to compress the gasket 116. The end of the nut 120 applies the force to compress the gasket 116 and not the collar 128.

As the nut 120 is threadedly advanced upon rotation into the threaded end of the respective fitting, the nut internal wedge surface 132 rides up the collar external wedge surface 130. This urges the collar 128 into frictional engagement with the respective conduit. The nut 120 is rotated until the shoulder 126 abuts the end of the fitting, and a preselected wedging force is applied by the nut 120 to the collar 128.

The frictional engagement of the collar 128 with the respective conduit is enhanced by the provision of an internal roughened surface, as by serrations 138, on the collar 128. Thus, the nut 120 is advanced a

17

preselected distance into the fitting to, not only effect a seal around the respective conduit by compression of the gasket 116, but also to firmly engage the collar 128 with the conduit. In this manner, the conduits 30 and 32 are sealingly connected to the valve assembly 10. A fluid tight seal is formed around the conduits 30 and 32 within the fittings and against the body of the fittings 28 and 30 within the fittings 28 and 30.

18

## CLAIMS

1. A flow control valve comprising, a valve body (14) moulded of plastics material and having a chamber (16) with an upper portion (18) and a lower portion (20), said lower portion (20) having an inlet opening (22) and an outlet opening (24), a valve seat (28) in said chamber lower portion (20) between said inlet and outlet openings (22, 24), a valve member (40) positioned in said valve seat (38) between said inlet and outlet openings (22, 24) said valve member (40) being moulded of plastics material to form a unitary body including a plug portion (46) and an actuator portion (48), said plug portion (46) having a flow passage (50) therethrough, said plug portion (46) being rotatable in said valve seat (38) between an open position where said flow passage (50) is aligned with said inlet and outlet openings (22, 24) and a closed position where said flow passage (50) is out of alignment with said inlet and outlet openings (22, 24) to control the flow of fluid through said chamber lower portion (20), said actuator portion (48) extending upwardly through said chamber upper portion (18) and including a flange (60) and a stem (62), said flange (60) and said stem (62) being connected to said plug portion (46), said flange (60) being spaced circumferentially around said stem (62) and extending upwardly between said valve body (14) and said stem (62) to a position overlying said valve body (14) and thereby closing said chamber upper portion (18), said stem (62) projecting upwardly from within said flange (60) and above said valve body (14), said valve body (14) including an upper shoulder (70) extending circumferentially around said chamber upper portion (18), and said flange (60) being positioned on said upper shoulder (70) so that impact forces applied to said actuator portion (48) are transmitted away from said stem (62) and plug (46) and from said flange (60) to said valve body (14) and distributed throughout the valve body (14).

2. A valve as claimed in claim 1, in which said valve body (14) includes an enlarged upper end portion (90) surrounding said chamber upper portion (19), said actuator portion (48) extending upwardly through said valve body enlarged upper end portion (90) and spaced therefrom to form an annular space between said valve body enlarged upper end portion (90) and said actuator portion (48), and seal means (88) positioned in said annular space for sealingly engaging said valve body enlarged upper end portion (90) and said actuator portion (48) to prevent moisture and debris from entering said chamber while allowing excess fluid pressure to escape from said chamber and out of said valve body (14).

3. A valve as claimed in claim 2, in which said flange (60) extends over said annular space and onto said upper shoulder (70), and said seal means (88) is positioned under and thereby protected by said flange (60) to prevent impact forces applied to said actuator from disturbing said seal means (88).

4. A valve as claimed in any preceding claim, in which said flange (60), stem (62) and plug portion (46) are connected to one another to form said valve member (40) as a moulded, integral body, said moulded integral body having a preselected wall thickness such that the wall thickness remains substantially uniform throughout said flange (60), stem (62), and plug portion (46).

5. A valve as claimed in claim 4, in which said moulded integral body of said valve member (44) has an external surface and an internal surface, said external and internal surfaces conforming to one another to achieve said preselected wall thickness uniformly throughout said moulded integral body, said flange (60) having a wall of a thickness substantially corresponding to the thickness of a wall of said plug portion (46), said valve body having a uniform wall thickness throughout corresponding to the uniform wall thickness of said valve member, and said flange wall having a radial section overlying said valve body and operable to increase the impact resistance of said flange above said valve body.

6. A valve as claimed in any preceding claim in which said stem (62) has an enlarged upper end portion (100), said stem enlarged upper end portion (100) having an elongated configuration overlying said flange (60), and said stem enlarged upper end portion (100) being undercut to form a recess (102) in the body of said stem (62) to weaken said stem (62) such that in the event that torque exceeding a preselected amount is applied to said stem (62) said enlarged upper end portion (100) breaks before the remaining portion of said valve member is damaged.

7.  A valve as claimed in claim 6, in which said stem enlarged upper end portion (100) includes position indicator means for indicating the relative position of said valve member (40) between said open and closed positions, and said position indicator means including a wing top positioned perpendicular to the direction of flow through said chamber when said plug portion is in said closed position and positioned parallel to the direction of flow through said chamber when said plug portion is in said open position.

8.  A valve as claimed in any preceding claim, in which said actuator portion (48) includes actuator stop means (92) for limiting said valve member to $90^o$ rotation between said open and closed positions, said actuator stop means including a tab (92) extending outwardly from said actuator portion below said flange (60), and said valve body (14) including a pair of stop shoulders (98) spaced a preselected radial distance apart on said valve body within said chamber upper portion and engageable with said tab (92) upon rotation of said valve member to limit said valve member to $90^o$ rotational movement between said open and closed positions.

9.  A valve as claimed in claim 8, in which said tab (92) is shearable from said actuator portion in the event that torque exceeding a preselected amount is applied to said stem so that said valve member is free to rotate through $360^o$ and remain operational to open and close said inlet and outlet openings.

10.  A valve as claimed in any preceding claim, in which said plug portion includes a pair of counterbores (52) in the external surface thereof, said counterbores (52) being spaced oppositely of one another and positioned $90^o$ relative to said flow passage, each of said counterbores including a pair of keyways (58), a pair of seal inserts (54) positioned in said pair of counterbores (52) respectively, each of said seal inserts (54) including a pair of keys (56) received within said pair of keyways (58) of said respective pair of counterbores (52) and said seal inserts (54) being retained in a compressed state within said counterbores (52) to securely retain said seal inserts (54) in a preselected orientation in said counterbores.

11.    A valve as claimed in claim 10, in which said seal inserts (54) are moulded of an elastomeric material and have a preselected configuration so that said seal inserts (54) are compressed when positioned in said counterbores (52) of said plug portion to sealingly engage said valve seat around said inlet and outlet openings when said plug portion is in said closed position.

12.    A valve as claimed in any preceding claim, including a pipe coupling (34, 36) comprising a fitting having a body portion with a bore (110) for receiving a pipe (30, 32), the body portion having a recess (112) surrounding said bore (110) to form an internal shoulder (114) within said fitting, an elastic deformable member (116) positioned in said recess (112) in abutting relation with said shoulder (114) and disposed to encircle and seal against the pipe (30, 32) and the fitting body portion, a nut (120) threadedly connected to said fitting body portion for advancement into said bore (110), and nut (120) having an internal bore with an internal wedge surface (132), a pipe-gripping collar (128) having an external wedge surface (13) complementary to and cooperating with said nut internal wedge surface (132) so that said collar (128) is positioned witin said nut internal bore and surrounding the pipe, said nut (120) including an end portion (122) surrounding said collar (128), said nut end portion (122) having a bearing surface for applying a compressive force which is transmitted to said elastic deformable member (116) to compress said elastic deformable member (116) against said fitting shoulder (114), and said nut being threadedly advanced upon rotation into said fitting bore to apply an axial force upon said elastic deformable member (116) to compress said elastic deformable member (116) to form a seal around the pipe within said fitting and axially advance the collar (128) into frictional engagement with the pipe and against the fitting body portion to retain the pipe within said fitting.

13.    A valve as claimed in claim 12, in which a radial shoulder (126) is provided on said nut (120), said fitting having an end portion, said nut (120) extending into said fitting bore to a position where said radial shoulder (126) abuts said fitting end portion thereby preventing further advancement of said nut in said fitting to control the degree of compression of said elastic deformable member (116) by said nut.

14. A valve as claimed in claim 12 or claim 13, in which a washer (118) is positioned within said fitting bore between said elastic deformable member (116) and said collar (128), said nut end portion bearing surface abutting said washer (118) above said collar, and said nut end portion bearing surface being compressed against said washer (118) to apply a uniform axial force throughout said washer (118) upon said elastic deformable member (116).

15. A valve as claimed in claim 14, in which said nut (120) and said collar (128) are fabricated of a plastics material, and said washer (118) is fabricated of a metallic material.

16. A valve as claimed in any one of claims 12 to 15, in which said elastic deformable member (116) includes an annular gasket being compressed axially between said fitting body portion shoulder on one side and said nut end portion on the opposite side, and said elastic deformable member being compressed between said fitting body portion and the pipe to effect a fluid tight seal around the pipe.

17. A valve as claimed in any one of claims 12 to 16, in which said collar (128) has a bore therethrough adapted to receive the pipe, an internal wall of said collar surrounding said bore, and said internal wall having a roughened surface for frictionally engaging the pipe to secure the pipe to said fitting.

18. A valve as claimed in any one of claims 12 to 17, which includes a stiffener (106) positioned in underlying relation with said fitting, nut, and collar within the pipe to reinforce the pipe in said fitting.

FIG. 1

FIG. 3

FIG. 4

0117610

FIG. 5

FIG. 2